Europäisches Patentamt

European Patent Office

Office européen des brevets

(11) Veröffentlichungsnummer: **0 293 876 B1**

(12) ## EUROPÄISCHE PATENTSCHRIFT

(45) Veröffentlichungstag der Patentschrift: **30.09.92**

(51) Int. Cl.⁵: **H04M 3/58**, H04Q 3/62

(21) Anmeldenummer: **88108810.8**

(22) Anmeldetag: **01.06.88**

(54) **Verfahren für eine aus einer Hauptsprechstelle und mehreren Nebensprechstellen bestenden Nebenstellenanlage mit zwei Amtsleitungen.**

(30) Priorität: **04.06.87 DE 3718761**

(43) Veröffentlichungstag der Anmeldung:
**07.12.88 Patentblatt 88/49**

(45) Bekanntmachung des Hinweises auf die
Patenterteilung:
**30.09.92 Patentblatt 92/40**

(84) Benannte Vertragsstaaten:
**AT BE CH DE LI**

(56) Entgegenhaltungen:
**EP-A- 0 122 354**
**FR-A- 1 389 919**

(73) Patentinhaber: **SIEMENS AKTIENGESELL-
SCHAFT
Wittelsbacherplatz 2
W-8000 München 2(DE)**

(72) Erfinder: **Girst, Rudolf, Dipl.-Ing.
Heinrich-Lübke-Strasse 3
W-8000 München 83(DE)**

## Beschreibung

Die Erfindung betrifft ein Verfahren für eine aus einer Hauptsprechstelle und mehreren Nebensprechstellen bestehenden Nebenstellenanlage mit zwei Amtsleitungen, mit einer internen Stromversorgung, einem Mikroprozessor als Steuerorgan, einer Internschleifenerkennung je Sprechstelle, mit je Amtsleitung jeder Sprechstelle fest zugeordneten, die interne Speisung und die Amtsleitungen an- und abschaltenden Schalteinrichtungen, wobei das Belegen einer freien Amtsleitung durch jede Sprechstelle oder das Weitergeben einer Amtsverbindung an jede Sprechstelle vorgesehen ist.

Eine obengenannte Nebenstellenanlage ist bereits vorgeschlagen worden (DE-A-36 04 538).

Diese Nebenstellenanlage enthält in der Hauptsprechstelle zusätzliche Einheiten wie Mikroprozessor, Spannungs- und Stromauswertungen, Ruferkennungen, die auch bei dem erfindungsgemäßen Verfahren vorgesehen sind. Auch erfolgt die Stromversorgung über ein zusätzliches Steckernetzgerät.

Eine ähnliche Nebenstellenanlage ist auch aus der Betriebsanleitung der Deutschen Bundespost, Ausgabe Juli 182, betreffend Postapparat FeAp 85/89 bekannt.

In beiden Fällen kann eine belegte Amtsleitung durch Nachwahl an eine andere der Nebenstellenanlage angeschlossene Sprechstelle weitergegeben werden. Diese Anlagen funktionieren jedoch nur mit Impulswahlverfahren.

Die Aufgabe der Erfindung soll daher darin bestehen, ein Verfahren zu finden, welches bei Verwendung von entsprechenden Baueinheiten den Betrieb einer solchen Nebenstellenanlage mit Mehrfrequenzverfahren erlaubt.

Dies wird dadurch erreicht, daß jeder Sprechstelle direkt parallel zu ihren Teilnehmeradern über eine Sprachschutzschaltung eine MFV-Empfangsschaltung angeschaltet ist, welche MFV-Wahlinformationen von der entsprechenden Sprechstelle an den Mikroprozessor weitergibt, wobei der Mikroprozessor nach Ablauf eines Zeitkriteriums auf vollständige Amtswahl erkennt, eine nachfolgende Wahlinformation als Internwahl wertet, die zu wählende Sprechstelle und zur belegten Amtsleitung gehörende Schalteinrichtung auf interne Speisung und die belegte Amtsleitung in Wartezustand schaltet und daß nach Entgegennahme des Anrufes an der internen angewählten Sprechstelle diese über ihre entsprechende Schalteinrichtung an die belegte Amtsleitung angeschaltet wird.

Hieraus ergibt sich der Vorteil, daß in einfacher Weise eine vorgenannte Nebenstellenanlage mit MFV-Wahl betrieben werden kann.

Das erfindungsgemäße Verfahren wird anhand einer Figur näher erläutert.

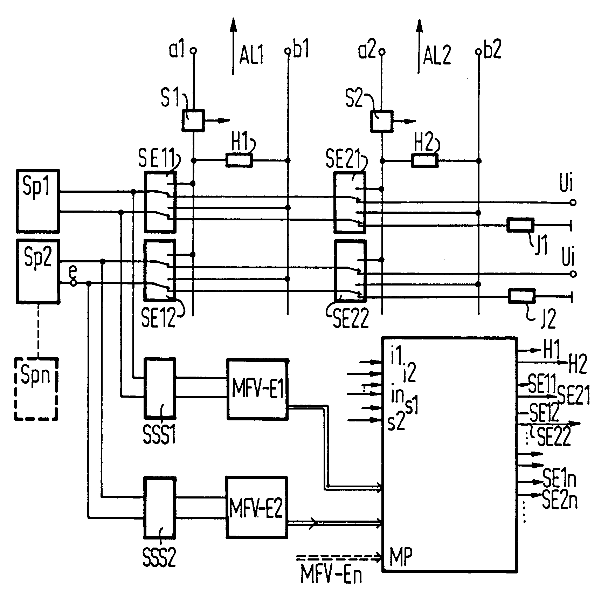

Die Figur zeigt im wesentlichen die Sprechstellen Sp1 bis Spn, die Schalteinrichtungen SE11, SE12, SE21, SE22, die Sprachschutzschaltungen SSS1 und SSS2, die Halteschaltungen H1 und H2, die Amtsleitungen AL1 und AL2, die Externschleifenerkennungen S1 und S2, die Internschleifenerkennungen I1 und I2, die MFV-Empfangsschaltungen MFV-E1 und MFV-E2 (MFV-En), die interne Speisung Ui und den Mikroprozessor MP mit den entsprechenden Steuerpunkten.

Zur Erläuterung des erfindungsgemäßen Verfahrens wird davon ausgegangen, daß eine der in der Figur aufgezeigten Sprechstellen Sp1 bis Spn die Hauptsprechstelle und die anderen Sprechstellen gleichberechtigte Nebensprechstellen sind. In der Hauptsprechstelle sind der Mikroprozessor und alle anderen gemeinsamen Versorgungs- und Steuereinheiten untergebracht. Es liegen zwei Amtsleitungen AL1 und AL2 vor, die von allen Sprechstellen belegt werden können und es sollen beispielsweise Amtsverbindungen vo einer Sprechstelle an eine andere Sprechstelle der Nebenstellenanlage übergeben werden können. Dabei wird grundsätzlich davon ausgegangen, daß die Sprechstellen für MFV-Wahl ausgelegt sind.

Es sei angenommen, daß von der Sprechstelle Sp2 eine Amtsverbindung aufgebaut werden soll. Bei Betätigen des Gabelumschaltkontaktes (Schließen) wird über eine Ader a der Teilnehmerleitung dieser Sprechstelle Sp2 und über die Ruheseiten der in dieser Ader liegenden Kontakte in den Schalteinrichtungen SE12 und SE22 der Internschleifenerkennung I2 ein Kriterium abgegeben, so daß diese den Belegungswunsch erkennt und über den Steuerpunkt i2 des Mikroorozessors MP diesen entsprechend ansteuert. Der Mikroprozessor MP enthält Informationen über die Belegung der Amtsleitungen AL1 und AL2. Sind beide Amtsleitungen frei, dann steuert er die Schalteinrichtung SE12 so, daß die Sprechstelle Sp2 an die Amtsleitung AL1 (a1,b1) angeschaltet wird. Wäre die Amtsleitung AL1 belegt und die Amtsleitung AL2 frei, dann würde die Schalteinrichtung SE22 entsprechend gesteuert werden (Sp2 an a2/b2). Sind beide Amtsleitungen belegt, dann erfolgt in bekannter Weise ein Besetzthinweis.

Über die Sprechstelle Sp2 kann jetzt eine Amtsverbindung aufgebaut werden. Direkt an die Ausgänge der Sprechstelle Sp2 ist eine dieser fest zugeordnete MFV-Empfangsschaltung MFV-E2 über eine Sprachschutzschaltung SSS2 angeschaltet. (Gleiches gilt für alle anderen Sprechstellen). Letztere ist notwendig, da die MFV-Empfangsschaltung ständig an die Sprechstelle angeschaltet ist und daher verhindert werden muß, daß während eines Gespräches durch Sprache irrtümlich Wahlinformationen der MFV-Empfangsschaltung vorgetäuscht werden.

Die an der Sprechstelle Sp2 vorgenommene MFV-Wahl wird durch die parallel geschaltete MFV-Empfangsschaltung MFV-E2 aufgenommen und in verwertbarer Form an den Mikroprozessor MP weitergegeben. Dieser erkennt z.B. aus einem Zeitkriterium (Zeitspanne nach Durchgabe des letzten Wahlzeichens) oder aus einem Kriterium der Externschleifenerkennung S1 über seinen Steuerpunkt s1 den Zustand "Wahlende" und wertet anschließend jedes weitere Wahlzeichen über die MFV-Empfangsschaltung MFV-E2 als internen Vermittlungswunsch. Wird beispielsweise an der Sprechstelle Sp2 eine "1" gewählt, dann wird bei zuvor belegter Amtsleitung AL1 die Schalteinrichtung SE12 zurückgeschaltet (Ruhestellung), so daß diese Sprechstelle Sp2 jetzt an der internen Speisung Ui liegt. Gleichzeitig wird über die Halteeinrichtung H1 die Amtsverbindung gehalten und die Sprechstelle Sp1 wird intern gerufen. Die MFV-Empfangsschaltung MFV-E2 bleibt an die Sprechstelle Sp2 angeschaltet, um eine eventuelle weitere Wahl dem Mikroprozessor melden zu können.

Wenn an der gerufenen Sprechstelle (hier Sp1) abgehoben wird, dann wird dies über Internschleifenerkennung I1 dem Mikroprozessor MP über seinen Steuerpunkt s1 mitgeteilt und die Schalteinrichtung SE11 schaltet die Sprechstelle Sp1 auf die Adern a1/b1 der Amtsleitung AL1, während die Halteschaltung H1 abgeschaltet wird.

Parallel zu den Ausgängen der Sprechstelle Sp1 ist deren MFV-Empfangsschaltung MFV-E1 (mit der Sprachschutzschaltung SSS1) geschaltet. Auf diese Weise kann ein weiterer Wahlvorgang von dieser Sprechstelle aus dem Mikroprozessor MP in verwertbarer Form mitgeteilt werden, so daß von diesem aus einsprechende Steuervorgänge erfolgen können.

In analoger Weise werden bei einer Belegung der Amtsleitung AL2 die Schalteinrichtungen SE22 und SE21 sowie die Halteschaltung H2 gesteuert.

Hiermit kann in einfacher Weise die vorgenannte Nebenstellenanlage bei MFV-Wahl betrieben werden.

## Patentansprüche

1. Verfahren für eine aus einer Hauptsprechstelle und mehreren Nebensprechstellen bestehenden Nebenstellenanlage mit zwei Amtsleitungen, mit einer internen Stromversorgung, einem Mikroprozessor als Steuerorgan, einer Internschleifenerkennung je Sprechstelle, mit je Amtsleitung jeder Sprechstelle fest zugeordneten, die interne Speisung und die Amtsleitungen an- und abschaltenden Schalteinrichtungen, wobei das Belegen einer freien Amtsleitung durch jede Sprechstelle oder das Weitergeben einer Amtsverbindung an jede Sprechstelle vorgesehen ist, **dadurch gekennzeich-**

**net,** daß jeder Sprechstelle (Sp1-Spn) direkt parallel zu ihren Teilnehmeradern über eine Sprachschutzschaltung (SSS1-SSSn) eine MFV-Empfangsschaltung (MFV-E1-MFV-En) angeschaltet ist, welche MFV-Wahlinformationen von der entsprechenden Sprechstelle (Sp1-Spn) an den Mikroprozessor (MP) weitergibt, wobei der Mikroprozessor (MP) nach Ablauf eines Zeitkriteriums auf vollständige Amtswahl erkennt, eine nachfolgende Wahlinformation als Internwahl wertet, die zu wählende Sprechstelle und zur belegten Amtsleitung gehörende Schalteinrichtung (SE11-SE2n) auf interne Speisung (Ui) und die belegte Amtsleitung (AL1/AL2) in Wartezustand schaltet und daß nach Entgegennahme des Anrufes an der internen angewählten Sprechstelle (Sp1-Spn) diese über ihre entsprechende Schalteinrichtung (SE11-SE2n) an die belegte Amtsleitung (AL1/AL2) angeschaltet wird.

2. Verfahren nach Patentanspruch 1, **dadurch gekennzeichnet,** daß die vollständige Amtswahl dem Mikroprozessor (MP) durch eine Externschleifenerkennung (S1/S2) angezeigt wird.

## Claims

1. Method for a private branch exchange with two exchange lines, comprising a main telephone station and a plurality of extension telephone stations, with an internal power supply, a microprocessor as control element, an internal loop detection for each telephone station, with switching devices permanently allocated to each telephone station for each exchange line and switching the internal power feeding and the exchange lines on and off, provision being made for the seizure of a free exchange line by each telephone station or for transferring an exchange call to each telephone station, characterised in that a dual-tone multi-frequency receiving circuit (MFV-E1-MFV-En) is connected to each telephone station (Sp1-Spn) directly in parallel with its subscriber wires via a speech protection circuit (SSS1-SSSn), which dual-tone multi-frequency receiving circuit forwards dual-tone multi-frequency dialling information items from the corresponding telephone station (Sp1-Spn) to the microprocessor (MP), the microprocessor (MP) recognising complete exchange dialling after a time criterion has elapsed, evaluating a subsequent dialling information item as internal dialling, switching the telephone station to be dialled and the switching device (SE11-SE2n) belonging to the seized exchange line to internal power feeding (Ui) and the seized exchange line (AL1/AL2) into camp-on mode and in that, after the call has been accepted as the internal telephone station (Sp1-Spn) dialled, the latter is connected via its corresponding switching device (SE11-SE2n) to the seized exchange line (AL1/AL2).

2. Method according to Claim 1, characterised in that the complete exchange dialling is signalled to the microprocessor (MP) by an external loop detection circuit (S1/S2).

**Revendications**

1. Procédé pour une installation à postes supplémentaires, constituée par un poste principal et par plusieurs postes supplémentaires, comportant deux lignes de service, un système interne d'alimentation en courant, un microprocesseur en tant qu'élément de commande, un circuit d'identification de la boucle interne pour chaque poste, des dispositifs de commutation qui sont associés de façon fixe à chaque poste, pour chaque ligne de service, et qui branchent et débranchent le système d'alimentation interne et les lignes de service, et selon lequel il est prévu une occupation d'une ligne de service libre par chaque poste ou la retransmission d'une liaison de service à chaque poste, caractérisé par le fait qu'à chaque poste (Sp1-Spn) est raccordé, et ce directement en parallèle avec ses conducteurs de raccordement de l'abonné et par l'intermédiaire d'un circuit (SSS1-SSSn) de protection des signaux vocaux, un circuit de réception MFV (MFV-E1-MFV-En) qui retransmet des informations de sélection MFV du poste correspondant (Sp1-Spn) au microprocesseur (MP), qui, après l'écoulement d'une durée formant critère temporel, identifie une sélection de service complète, évalue une information de sélection suivante en tant que sélection interne et raccorde le dispositif de commutation (SE11-SE2n), associé au poste devant être sélectionné et à la ligne de service occupée, au système d'alimentation interne (Ui) et place dans l'état d'attente la ligne de service occupée (AL1/AL2), et qu'après réception de l'appel dans le poste (Sp1-Spn) sélectionné de façon interne, ce dernier est raccordé à la ligne de service occupée (AL1/AL2), par l'intermédiaire de son dispositif de commutation correspondant (SE11-SE2n).

2. Procédé suivant la revendication 1, caractérisé par le fait que la sélection de service complète est indiquée au microprocesseur (MP) par un circuit (S1/S2) d'identification de boucle externe.